Europäisches Patentamt

European Patent Office

Office européen des brevets

(19)

(11) EP 0 340 843 B1

(12) FASCICULE DE BREVET EUROPEEN

(45) Date de publication et mention
de la délivrance du brevet:
**15.07.1998  Bulletin 1998/29**

(51) Int Cl.⁶: **H04N 7/00**

(21) Numéro de dépôt: **89201059.6**

(22) Date de dépôt: **24.04.1989**

(54) **Système de transmission d'images utilisant un canal de transmission à bande passante relativement étroite**

Übertragungssystem für Bilder, das einen Übertragungskanal mit einer relativ schmalen Bandbreite verwendet

System for transmitting pictures using a transmission channel with a relatively narrow bandwidth

(84) Etats contractants désignés:
**DE FR GB**

(30) Priorité: **29.04.1988  FR 8805776**

(43) Date de publication de la demande:
**08.11.1989  Bulletin 1989/45**

(60) Demande divisionnaire: **95200019.8 / 0 650 297**

(73) Titulaires:
• **LABORATOIRES D'ELECTRONIQUE PHILIPS S.A.S.**
**94450 Limeil-Brévannes (FR)**
Etats contractants désignés:
**FR**
• **Philips Electronics N.V.**
**5621 BA Eindhoven (NL)**
Etats contractants désignés:
**DE GB**

(72) Inventeur: **Fonsalas, Frédéric**
**F-75007 Paris (FR)**

(74) Mandataire: **Chaffraix, Jean et al**
**Société Civile S.P.I.D.**
**156, Boulevard Haussmann**
**75008 Paris (FR)**

(56) Documents cités:
**EP-A- 0 160 547          EP-A- 0 181 215**
**GB-A- 2 110 046          GB-A- 2 195 216**
**US-A- 3 073 896          US-A- 4 383 272**

• **PROCEEDINGS OF THE WORKSHOP ON MOTION: REPRESENTATION AND ANALYSIS, Charleston, South Carolina, 7-9 mai 1986, pages 119- 124, IEEE, New York, US; H. SHARIAT et al.: "How to use more than two frames to estimate motion"**
• **BRITISH BROADCASTING CORP., Research Department, Engineering Division, BBC RD 1987/11, septembre 1987, pages 1-20, Londres, GB; G.A. THOMAS: "Television motion measurement for DATV and other applications"**
• **COLLOQUE TVHD, Ottawa, 4-8 octobre 1987, tome 1, pages 6.2.2-6.2.28; P. BERNARD et al.: "Analyse de structures de sous-échantillonnage spatio-temporel d'un signal TVHD en vue de sa transmission dans un canal MAC"**

## Description

La présente invention concerne un système de transmission d'images utilisant un canal de transmission à bande passante relativement étroite, système comportant :

d'une part, un dispositif émetteur pourvu :

- d'un organe de prises de vues prévu pour fournir des informations d'images complètes par unité de temps,
- d'un organe d'estimation de mouvement pour fournir des indications de mouvement à transmettre pour des blocs de points d'image en opérant sur des successions d'images complètes,
- d'un organe de prélèvement pour fournir des images à transmettre en prélevant une image parmi N images complètes, N étant supérieur à 2, et en laissant N-1 images intermédiaires à restituer,
- d'un organe d'émission pour transmettre les images à transmettre et les indications de mouvement à transmettre,

d'autre part, au moins un dispositif récepteur pourvu :

- d'un organe récepteur pour fournir des images transmises et des indications de mouvements transmises à partir des images à transmettre et des indications de mouvements à transmettre,
- d'un organe d'interpolation pour restituer les N-1 images intermédiaires à partir des images transmises en tenant compte des indications de mouvement transmises.

On sait que la transmission des images implique une largeur de bande passante de canaux de transmission élevée. Cette largeur devient rapidement prohibitive lorsqu'on veut transmettre des images de bonne définition (télévision HDTV). On a constaté que, bien souvent, la variation du contenu d'une image à l'autre est bien moins élevée, en général, que la variation d'une zone à l'autre d'une même image, en d'autres termes, la corrélation temporelle est supérieure à la corrélation spatiale.

Pour pouvoir fournir de bonnes images intermédiaires, l'estimation de l'indication de mouvement doit être faite avec soin.

Le document :

PROCEEDINGS Workshop on MOTION REPRESENTATION and ANALYSIS, 7-9 Mai 1986, Kiawah Island Resort, Charleston, South Carolina pages 119-123,

propose aussi de tenir compte de plusieurs images pour effectuer cette estimation. Cette estimation de mouvement est établie sur la détermination de plusieurs coefficients définissant des rotations et des déplacements. Ces coefficients sont d'autant plus précis qu'on analyse plus d'images. Cette méthode implique que la nature des mouvements soit prévue et définissable par des équations. Elle est donc inefficace pour tous les mouvements non prévus. En outre, ce document ne mentionne pas la façon dont est faite l'interpolation et cette méthode implique quand même bien des calculs.

La présente invention propose un système du genre cité dans le préambule qui ne préjuge en rien de la nature des images à transmettre.

Pour cela, un tel système est remarquable en ce que l'organe d'estimation de mouvement comporte :

- des moyens d'affectation pour affecter à des blocs d'images intermédiaires une pluralité d'indications de mouvement candidat relativement à des images à transmettre,
- des moyens de sélection d'indication de mouvement pour affecter une seule indication de mouvement parmi ladite pluralité d'indications de mouvement candidat en se basant sur la succesion d'images constitué par :
- des premiers moyens d'évaluation de coût pour fournir une fonction coût CT1 pour chaque candidat de la pluralité en évaluant leur corrélation dans les images de la succession, la fonction coût étant nulle pour une corrélation parfaite,
- des premiers moyens de détermination pour déterminer la seule indication de mouvement en choisissant le candidat qui minimise la fonction coût.

Cependant, lorsqu'on veut transmettre des images de haute qualité en respectant les normes D2-MAC, les mesures précitées sont insuffisantes pour asssurer le compromis bande passante/qualité. La présente invention propose donc pour assurer ce compromis une mesure supplémentaire qui consiste en ce que le dispositif émetteur est pourvu, en outre, d'une deuxième organe de prélèvement pour prélever une partie des points des images fournies par le premier organe de prélèvement afin de constituer l'information de transmission tandis que l'organe d'interpolation est constitué en outre d'un organe d'interpolation spatiale pour interpoler les points d'images non transmis.

La description suivante, accompagnée des dessins ci-annexés, le tout donné à titre d'exemple non limitatif, fera bien comprendre comment l'invention peut être réalisée.

La figure 1 est un schéma d'un système de transmission conforme à l'invention.

La figure 2 montre la transmission des images.

La figure 3 montre un premier exemple de réalisation du premier organe de prélèvement.

La figure 4 montre un organe de reconstruction coopérant avec l'organe de la figure 3.

La figure 5 montre la répartition dans le temps des images à interpoler.

La figure 6 montre l'exemple de réalisation préféré de l'organe de prélèvement.

La figure 7 montre le prélèvement des points, effectué par le deuxième organe de prélèvement.

La figure 8 montre l'organe de reconstruction coopérant avec l'organe de la figure 6.

La figure 9 montre le détail de réalisation de l'organe de désentrelacement.

La figure 10 montre le fonctionnement de l'organe de désentrelacement de la figure 9.

La figure 11 montre le détail de réalisation préféré de l'organe de reconstruction.

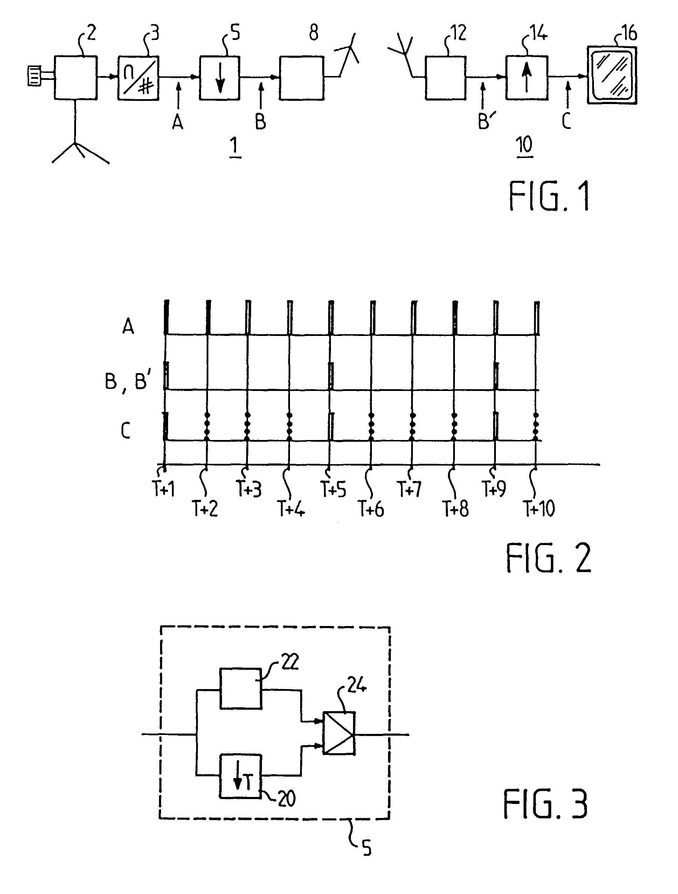

A la figure 1, la référence 1 indique un dispositif émetteur 1. Ce dispositif comporte une caméra de télévision 2 qui fournit des signaux analogiques. Ces signaux sont convertis en signaux numériques par un convertisseur analogique-numérique 3. Ces signaux numériques sont constitués par des échantillons numériques de 8 éléments binaires par exemple, de sorte que chaque échantillon représente un point d'image analysé par la caméra 2. Comme la caméra 2 est une caméra à haute définition, il n'est pas possible de transmettre tous ces échantillons par les canaux de bande passante usuelle, aussi a-t-on prévu un organe de prélèvement 5 qui n'en prélève qu'un certain nombre pour être transmis à l'aide de l'organe de transmission 8.

A la figure 1, la référence 10 indique un dispositif récepteur. Les échantillons transmis sont restitués à la sortie d'un organe de réception 12 et un organe de reconstruction 14 élabore les informations pour reconstituer les échantillons manquants pour qu'un organe de visualisation 16 puisse restituer une image de qualité aussi proche que possible de celle analysée par la caméra 2.

A la figure 2 on a représenté en A par des traits placés en des instants T, T+1, T+2 ..., T+10 l'apparition d'images fournies par la caméra 2 et considérées à la sortie du convertisseur 3.

L'organe de prélèvement 5 prélève les échantillons concernant une image sur N (dans l'exemple décrit N = 4) de sorte que seules les images apparaissant aux instants T+1, T+5, T+9 sont transmises, ce qui est montré sur la figure 2 à la ligne B,B'. Ces images transmises se retrouvent à l'entrée de l'organe de reconstruction 14 qui élabore les images intermédiaires à partir des images transmises, ce qui est représenté par des pointillés à la ligne C de la figure 2.

Les images intermédiaires peuvent être reconstituées en interpolant ou en répétant les images transmises. Cependant, il est préférable de reconstituer les images en tenant compte des déplacements des points de luminance d'une image à l'autre.

A la figure 3, on a représenté un organe de prélèvement 5 qui comporte un premier organe de prélèvement d'images proprement dit portant la référence 20 ; cet organe 20 fournit à sa sortie une image sur quatre parmi toutes les images élaborées par la caméra 2. D'autre part un organe d'estimation de mouvement 22 fournit pour des blocs de points d'images un vecteur déplacement affecté à chacun d'eux, de sorte qu'un multiplexeur d'information 24 fournit à sa sortie un multiplexage d'informations concernant la totalité des points d'une image et les vecteurs déplacements des blocs de points des images non transmises.

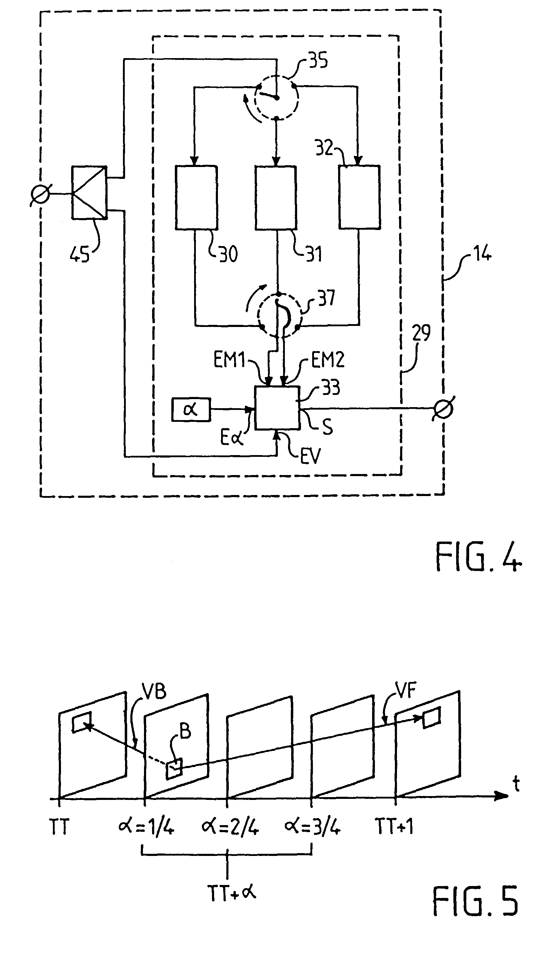

A la figure 4, on a représenté un organe de reconstruction 14 convenant à la figure 3. Cet organe est formé d'un ensemble de calcul d'images 29 constitué d'une part de trois mémoires 30, 31 et 32 dont chacune est prévue pour contenir une image et d'autre part d'un organe de calcul d'interpolation 33. Un commutateur rotatif 35 permet qu'une image soit enregistrée tour à tour dans chacune de ces mémoires. Un autre commutateur rotatif 37 permet la lecture de deux mémoires pour qu'une interpolation puisse s'effectuer au moyen de l'organe de calcul d'interpolation 33. Cet organe de calcul est muni de deux entrées EM1 et EM2 pour être raccordé aux sorties de deux mémoires sélectionnées par le commutateur 37, d'une entrée EV pour recevoir l'information de déplacement et d'une entrée Ea pour recevoir le numéro d'image à fournir à sa sortie S qui constitue la sortie de l'organe 14. L'information de déplacement et les informations d'images transmises proviennent d'un démultiplexeur 45 qui effectue le tri du flot d'informations amenées à son entrée.

Les organes de prélèvement 5 et de reconstruction 14 montrés aux figures 3 et 4 coopèrent de la façon suivante.

Tout d'abord, on se reporte à la figure 5 où on a représenté, en fonction du temps t, l'apparition de différentes images au niveau de l'organe de prise de vues. Ces images surviennent respectivement aux temps ..., TT, TT+$\alpha$, ..., TT+1, où $\alpha$ = 1/4, 2/4, 3/4. Seules les images survenant aux temps TT et TT+1 sont effectivement transmises. L'organe d'estimation de mouvement 22 va déterminer, pour chaque image intermédiaire, c'est-à-dire celles survenant aux instants TT+$\alpha$, une information de mouvement a, donnant donc la place de l'image à interpoler par rapport aux images transmises.

L'organe d'estimation 22 fournit pour chaque image intermédiaire à interpoler une grandeur de déplacement VA ou VF. Une de ces grandeurs est déterminée pour des blocs de points d'images d'une manière bien connue que l'on rappelle ci-dessous. Par exemple pour chaque image de 1152 lignes de 1440 points d'image (ce qui correspond à un échantillonnage à 54 MHz des images haute définition, on forme des blocs de 16 segments de ligne dont chacun comporte 16 points. Un tel bloc est représenté à la figure 5 par la référence B. Pour déterminer la grandeur VB, on cherche un bloc dans l'image survenant à l'instant TT qui donne la meilleure corrélation avec le bloc B. Pour déterminer la grandeur VF, on cherche un bloc dans l'image survenant à l'instant TT+1 qui donne la meilleure corrélation avec ce même bloc B.

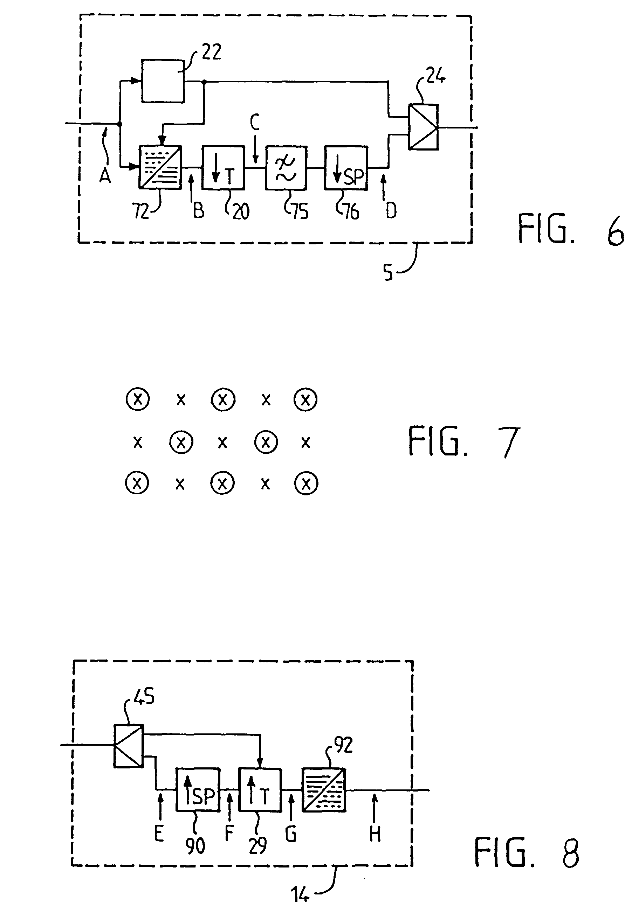

A la figure 6 et suivantes, on a représenté un mode de réalisation de l'invention. Ce mode est relatif à la télévision à haute définition transmise selon les exigences des normes MAC paquets. Il est aussi adapté aux caméras de haute définition actuelles qui fournissent des images entrelacées.

A la figure 6 qui représente un organe de prélèvement 5, la référence 72 indique un convertisseur qui effectue l'opération d'entrelacement et de désentrelacement, avant que ne s'opère le processus de prélèvement d'une image sur quatre au moyen de l'organe de prélèvement. Cependant ce prélèvement est insuffisant pour assurer la transmission aussi doit-on encore effectuer une deuxième opération de prélèvement qui s'effectue spatialement, c'est-à-dire que l'on prélève un point sur deux des images à transmettre conformément à la figure 7 qui représente un certain nombre de points des images prélevées. Ces points sont représentés par des croix et les points prélevés pour la transmission sont entourés d'un cercle ; le prélèvement spatial s'effectue en quinconce. Pour cela, afin d'éviter les phénomènes de repliement de spectre, on filtre spatialement les images à la sortie de l'organe 20 au moyen d'un filtre passe-bas 75 et un deuxième organe de prélèvement effectue donc le prélèvement indiqué ci-dessus. Il convient, maintenant, de faire le bilan des débits d'informations. On considère :

les informations A, à l'entrée de l'organe 5,
les informations B, à la sortie de l'organe 72,
les informations C, à la sortie de l'organe 20,
les informations D, à la sortie de l'organe 76.

En A :    on a 1152 lignes entrelacées tous les 50 Hz, soit 1250 2:1 50 Hz, correspondant à un débit de 54 Megaoctets/s,

en B :    on a 1152 lignes non entrelacées tous les 50 Hz, soit 1250 1:1 50 Hz, correspondant à un débit de 108 Megaoctets/s,

en C :    on prélève une image sur 4, ce qui correspond à un débit de 27 Megaoctets/s,

en D :    on prélève en moyenne un point sur deux, ce qui correspond à un débit de 13,5 Megaoctets/s compatible avec le débit de transmission toléré par la norme D2-MAC paquets.

A la figure 8, l'organe de reconstruction 14, coopérant avec l'organe de prélèvement d'images de la figure 6, est constitué tout d'abord d'un organe d'interpolation spatiale 90 connecté en sortie de l'organe démultiplexeur pour reformer par une simple interpolation linéaire les points non transmis. Puis l'ensemble 29 rétablit les images intermédiaires en fonction du déplacement transmis et reçu en sortie du démultiplexeur 45. Puis pour se raccorder aux organes de visualisation conventionnels, un organe de conversion d'entrelacement 92 effectue l'opération image non-entrelacée - image entrelacée. Tout comme pour l'organe de prélèvement 5, on effectue le bilan du débit d'informations aux points E, F, G, H considérés respectivement à l'entrée de l'organe d'interpolation spatiale 90, à sa sortie, à la sortie de l'ensemble 29 et à la sortie de l'organe 92.

En E :    tout comme en D, on a un débit de 13,5 Megaoctets/s,
en F :    on retrouve un débit de 27 Megaoctets/s,
en G :    on obtient l'image non-entrelacée 1250 1:1 50 Hz correspondant à un débit de 108 Megaoctets/s,
en H :    on obtient l'image de haute définition 1250 2:1 50 Hz correspondant à un débit de 54 Megabits/s.

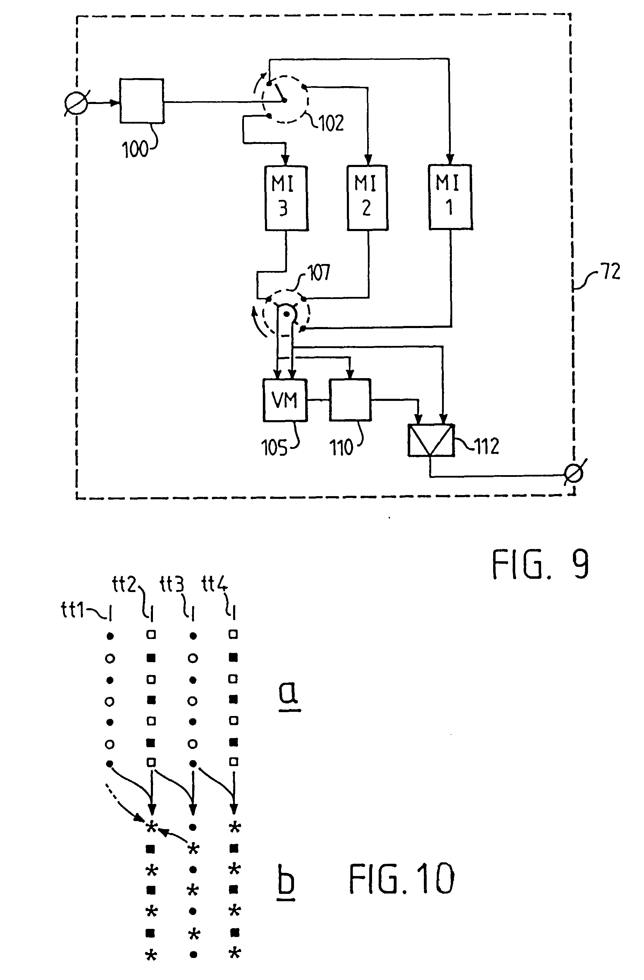

A la figure 9, on a montré en détail le convertisseur 72 qui effectue l'opération entrelacement - non-entrelacement. Il comporte un organe d'interpolation de lignes intermédiaires 100. Pour expliquer cette opération on se reporte à la figure 10 en a où l'on a représenté d'une manière schématique, sur la tranche en section verticale, les différentes images fournies à la sortie du convertisseur 3. On considère par exemple les instants tt1, tt2, tt3, tt4. Les points noirs représentent les lignes existantes pour les instants tt1, tt3, correspondant aux images impaires tandis que les carrés noirs représentent les lignes existantes pour les instants tt2, tt4 correspondant aux images paires. On voit que spatialement les points noirs et les carrés noirs s'enchevêtrent pour deux images successives. L'organe d'interpolation de ligne 100 calcule les lignes intermédiaires par simple interpolation des lignes existantes pour une image donnée ; ceci est représenté par des ronds blancs pour les images des instants tt1, tt3 et par des carrés blancs pour les images des instants tt2 et tt4. Ces images sont ensuite emmagasinées tout à tour dans les mémoires MI1, MI2 et MI3 par l'intermédiaire d'un commutateur rotatif 102. Un organe d'estimation de mouvement 105 évalue le mouvement VM entre deux images. Pour cela des information sont prélevées dans deux mémoires successives, tout à tour parmi les mémoires précitées MI1 à MI3, au moyen d'un commutateur rotatif à deux contacts. Un organe de calcul de ligne 110 calcule les lignes intermédiaires en utilisant la formule :

$$I(xL,T) = 1/2\,[I(xL - VM,T-1) + I(xL + VM,T+1)]$$

où xL représente les coordonnées selon les lignes intermédiaires.

On remarquera qu'à tout VM correspond dans l'autre image, des points d'images, ceci à cause de la présence de l'organe 100.

Un multiplexeur 112 prélève soit les lignes existantes, soit les lignes calculées par l'organe 110. Ces lignes calculées sont montrées en b à la figure 10 par des étoiles.

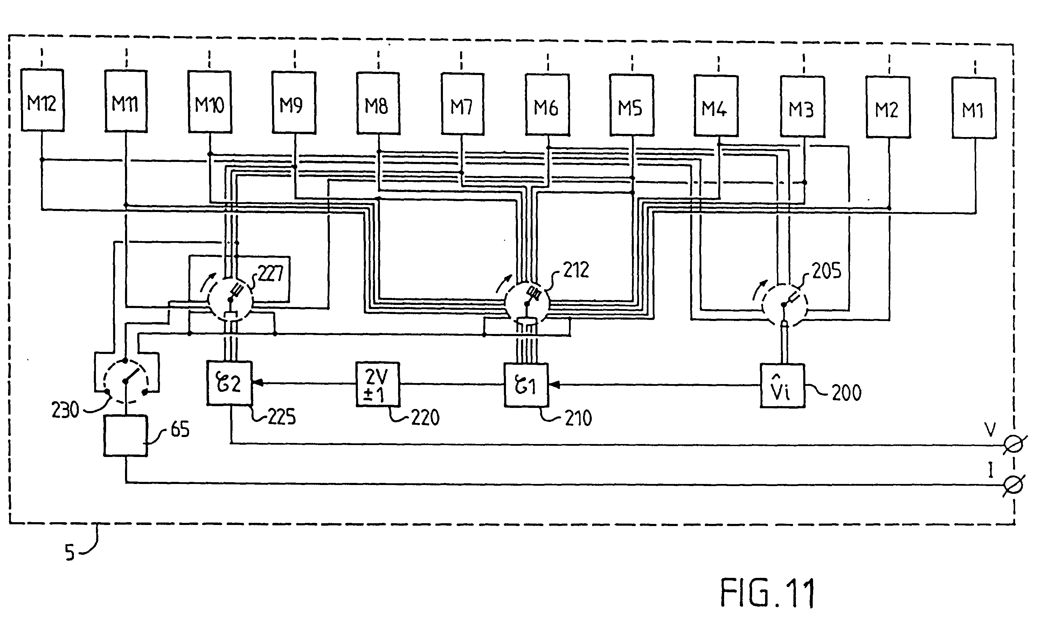

A la figure 11, on a représenté l'organe de prélèvement 5 conforme au mode de réalisation préféré de l'invention ; il est constitué autour des douzes mémoires enregistrées de la même manière.

On cherche tout d'abord à déterminer un seul vecteur mouvement pour les trois images non transmises. Un organe de détermination 200 fournit un ensemble de vecteurs déplacement $\hat{V}_i$ pour chaque bloc analysé. Ces déplacements sont évalués entre les images des instants T+2 et T+4 ou entre les instants T6 et T8, entre des images espacées de 40 ns. Ces images sont emmagasinées soit dans les mémoires M2 et M4, soit dans les mémoires M6 et M8, soit dans les mémoires M10 et M12 et sélectionnées au moyen d'un commutateur rotatif 205 à deux contacts. On trouvera dans l'article suivant, des indications pour un tel organe de détermination :

"Television Motion Measurement for DATV and other Applications" de G.A. Thomas, B.A. (Hons), A.M.I.E.E. paru dans le BBC-Research Department Report (BBC RD 1987/11) de septembre 1987.

Pour choisir le meilleur des candidats déterminés par l'organe 200 on utilise un organe de calcul de coût CT1 qui détermine le candidat parmi N en effectuant :

$$CT1(\hat{V}_i) = \{\sum_B \{[I(x_B,TT_{2/4})] - \frac{1}{2}[I(x_B+\hat{V}_i,TT_{3/4}) + I(x_B-\hat{V}_i,TT_{1/4})]\}^2$$

$$+ \frac{1}{2}\sum_B \{[I(x_B,TT_{2/4})] - \frac{1}{2}[I(x_B+2\hat{V}_i,TT_{+1}) + I(x_B-2\hat{V}_i,TT)]\}^2\}$$

où la notation TTα doit être comprise comme TT+α pour être cohérente avec la figure 5, et B est le bloc considéré.

On notera que le candidat qui minimise cette fonction CT1 tient compte en outre des images $T_{3/4}$ et $T_{1/4}$. Les différentes informations nécessaires à ce calcul sont prélevées au moyen d'un commutateur rotatif 210 à 5 contacts.

Le vecteur déterminé par 210 a une précision au point d'image près lorsqueles images sont distantes de 40 ns. Mais la précision pour des images distantes de 80 ns n'est plus suffisante. Aussi, on élabore au moyen de l'organe de fluctuation 220 qui fournit neuf vecteurs de mouvement VPM1, VPM2, ..., VPM9 à partir d'un vecteur VM de composante verticale VMV et de composante horizontale VMH :

$$VPM1 = \begin{vmatrix} VMH \\ VMV \end{vmatrix} \qquad VPM4 = \begin{vmatrix} VMH + u \\ VMV + u \end{vmatrix} \qquad VPM7 = \begin{vmatrix} VMH + u \\ VMV - u \end{vmatrix}$$

$$VPM2 = \begin{vmatrix} VMH + u \\ VMV \end{vmatrix} \qquad VPM5 = \begin{vmatrix} VMH - u \\ VMV \end{vmatrix} \qquad VPM8 = \begin{vmatrix} VMH - u \\ VMV + u \end{vmatrix}$$

$$VPM3 = \begin{vmatrix} VMH \\ VMV + u \end{vmatrix} \qquad VMP6 = \begin{vmatrix} VMH \\ VMV - u \end{vmatrix} \qquad VPM9 = \begin{vmatrix} VMH - u \\ VMV - u \end{vmatrix}$$

où u représente la distance entre points d'images supposée égale en horizontal et en vertical.

Pour choisir le meilleur de ces vecteurs on utilise un deuxième organe de coût CT2 qui détermine le meilleur vecteur VPMi en effectuant :

$$CT2(VPMi) = \{\{\sum_B \cdot I(x_B,TT_{2/4}) - 1/2[I(x_B-VPMi,TT) + (x_B+VPMi,TT+1)]\}\}^{1/2}$$

Les informations nécessaires à ce calcul sont prélevées dans les mémoires au moyen d'un commutateur rotatif 227 ; un commutateur 230 permet à l'organe 65 de prélever les informations d'images à transmettre.
Du côté réception l'organe 29 a à effectuer les opérations suivantes :

- pour l'image transmise à l'instant T : restitution intégrale de I(x,T)
- pour les images à restituer :

1. on calcule l'image à TT+2/4 à partir des images transmises aux instants TT et TT+1 en appliquant la formule :

$$I(x,TT_{2/4}) = 1/2 \; [I(x\text{-}VPM,TT) + I(x\text{+}VPM,TT\text{+}1)]$$

2. on calcule $TT_{1/4}$ et $TT_{3/4}$ en utilisant les formules :

$$I(x,TT_{1/4}) = 1/2 \; [I(x - VPM/2, TT) + I(x + VPM/2, TT_{2/4})]$$

$$I(x,TT_{3/4}) = 1/2 \; [I(x - VPM/2, TT_{2/4}) + I(x + VPM/2, TT\text{+}1)]$$

On peut aussi, en variante, procéder de la manière suivante pour les images à restituer :

$$I(x,TT_{1/4}) = 3/4 \; [I(x - VPM/2, TT) + 1/4 \; [I(x + 3/2 \; VPM,TT\text{+}1)].$$

## Revendications

1.  Système de transmission d'images utilisant un canal de transmission à bande passante relativement étroite, système comportant :
    d'une part, un dispositif émetteur (1) pourvu :

    - d'un organe de prises de vues (2) prévu pour fournir des informations d'images complètes par unité de temps,
    - d'un organe d'estimation de mouvement (22) pour fournir des indications de mouvement à transmettre pour des blocs de points d'image en opérant sur des successions d'images complètes,
    - d'un organe de prélèvement (5) pour fournir des images à transmettre en prélevant une image parmi N images complètes, N étant supérieur à 2, et en laissant N-1 images intermédiaires à restituer,
    - d'un organe d'émission (8) pour transmettre les images à transmettre et les indications de mouvement à transmettre,

    d'autre part, au moins un dispositif récepteur (10) pourvu :

    - d'un organe récepteur pour fournir des images transmises et des indications de mouvements transmises à partir des images à transmettre et des indications de mouvements à transmettre,
    - d'un organe d'interpolation (33) pour restituer les N-1 images intermédiaires à partir des images transmises en tenant compte des indications de mouvement transmises,

    caractérisé en ce que :
    l'organe d'estimation de mouvement comporte :

    - des moyens d'affectation pour affecter à des blocs d'images intermédiaires une pluralité d'indications de mouvement candidat relativement à des images à transmettre,
    - des moyens de sélection d'indication de mouvement pour affecter une seule indication de mouvement parmi ladite pluralité d'indications de mouvement candidat en se basant sur la succession d'images constitué par :
    - des premiers moyens d'évaluation de coût pour fournir une fonction coût CT1 pour chaque candidat de la pluralité en évaluant leur corrélation dans les images de la succession, la fonction coût étant nulle pour une corrélation parfaite,
    - des premiers moyens de détermination pour déterminer la seule indication de mouvement en choisissant le candidat qui minimise la fonction coût.

2. Système de transmission d'images selon la revendication 1, caractérisé en ce que les moyens de sélection d'indication de mouvement comportent en outre :

   - un organe de fluctuation qui fournit une seconde pluralité de vecteurs candidats établie sur la base de l'indication de mouvement établie par les premiers moyens de détermination,
   - des deuxièmes moyens d'évaluation de coût pour déterminer une fonction coût pour chaque candidat de la seconde pluralité,
   - des deuxièmes moyens de détermination en choisissant le candidat qui minimise la fonction coût.

3. Système de transmission d'images selon les revendications 1 à 2, caractérisé en ce que la fonction coût est, pour chaque candidat $\hat{V}_i$ :

$$CT1(\hat{V}_1) = \{\sum_B \{[I(x_B,TT_{2/4})] - \frac{1}{2}[I(x_B+\hat{V}_i,TT_{3/4}) + I(x_B-\hat{V}_i,TT_{1/4})]\}^2$$

$$+ \frac{1}{2}\sum_B \{[I(x_B,TT_{2/4})] - \frac{1}{2}[I(x_B+2\hat{V}_i,TT_{+1}) + I(x_B-2\hat{V}_i,TT)]\}^2\}$$

où $x_B$ représente les points d'un bloc B, $TT_{1/4}$, $TT_{2/4}$, $TT_{3/4}$ les images non prélevées et TT et $TT_{+1}$ les images prélevées successivement.

4. Système de transmission d'images selon la revendication 3, caractérisé en ce que l'organe d'interpolation effectue l'opération suivante pour évaluer la seconde fonction de coût :

$$CT2(VPMi) = \{\{\Sigma.I(x_B,TT_{2/4}) - \frac{1}{2}[I(x_B-VPMi,TT) + I(x_B+VPMi,TT+1)]\}\}^{1/2}$$

où les VPMi sont les vecteurs de la seconde pluralité élaborée par l'organe de fluctuation, les vecteurs VPMi étant tels :

$$VPM1 = \begin{vmatrix} VMH \\ VMV \end{vmatrix} \qquad VPM4 = \begin{vmatrix} VMH + u \\ VMV + u \end{vmatrix} \qquad VPM7 = \begin{vmatrix} VMH + u \\ VMV - u \end{vmatrix}$$

$$VPM2 = \begin{vmatrix} VMH + u \\ VMV \end{vmatrix} \qquad VPM5 = \begin{vmatrix} VMH - u \\ VMV \end{vmatrix} \qquad VPM8 = \begin{vmatrix} VMH - u \\ VMV + u \end{vmatrix}$$

$$VPM3 = \begin{vmatrix} VMH \\ VMV + u \end{vmatrix} \qquad VMP6 = \begin{vmatrix} VMH \\ VMV - u \end{vmatrix} \qquad VPM9 = \begin{vmatrix} VMH - u \\ VMV - u \end{vmatrix}$$

où

u       représente la distance entre points d'images, supposée égale en horizontal et en vertical,
VMH et VMV    sont les composantes horizontale et verticale de l'indication de mouvement établie sur la base de la première pluralité de vecteurs candidats.

5. Système de transmission d'images selon la revendication 3 ou 4 caractérisé en ce que l'organe d'interpolation effectue les opérations suivantes, pour les images à restituer :

   a on calcule l'image à TT+2/4 à partir des images transmises aux instants TT et TT+1 en appliquant la formule :

$$I(x,TT_{2/4}) = \frac{1}{2}[I(x-VPM,TT) + I(x+VPM,TT+1)]$$

   b on calcule $TT_{1/4}$ et $TT_{3/4}$ en utilisant les formules :

$$I(x,TT_{1/4}) = \frac{1}{2} \left[ I(x-\frac{VPM}{2}, TT)+I(x+\frac{VPM}{2}, TT_{2/4}) \right]$$

$$I(x,TT_{3/4}) = \frac{1}{2} \left[ I(x-\frac{VPM}{2}, TT_{2/4})+I(x+\frac{VPM}{2}, TT+1) \right]$$

6. Système de transmission d'images selon la revendication 3 ou 4 caractérisé en ce que l'organe d'interpolation effectue les opérations suivantes, pour les images à restituer :

    a on calcule l'image à TT+2/4 à partir des images transmises aux instants TT et TT+1 en appliquant la formule :

$$I(x,TT_{2/4}) = \frac{1}{2} \left[ I(x-VPM,TT) +I(x+VPM,TT+1) \right]$$

    b on calcule $TT_{1/4}$ et $TT_{3/4}$ en utilisant les formules :

$$I(x,TT_{1/4}) = \frac{3}{4} \left[ I(x-\frac{VPM}{2},TT) \right] + \frac{1}{4} \left[ I(x+\frac{3}{2} VPM,TT+1) \right]$$

$$I(x,TT_{3/4}) = \frac{1}{2} \left[ I(x-\frac{VPM}{2},TT_{2/4})+I(x+\frac{VPM}{2},TT+1) \right]$$

7. Système de transmission d'images selon l'une des revendications 1 à 6 caractérisé en ce que le dispositif émetteur est pourvu, en outre, d'un deuxième organe de prélèvement pour laisser une partie de points intermédiaires et pour prélever une partie des points des images fournies par le premier organe de prélèvement afin de constituer les images à transmettre et en ce que l'organe d'interpolation comporte des circuits d'interpolation pour restituer les points intermédiaires à partir des points transmis.

8. Procédé pour transmettre des images comprenant les étapes suivantes :
d'une part, pour former des informations d'images à transmettre constituées par des images à transmettre et des indications de mouvement établies sur des images complètes :

- une estimation de mouvement pour fournir des indications de mouvement sur des blocs de points d'image complètes,
- un prélèvement pour fournir des images à transmettre en prélevant une image parmi N images complètes, N étant supérieur à 2, et en laissant N-1 images intermédiaires à restituer,

d'autre part, pour restituer les images,

- une réception pour fournir des images transmises et des indications de mouvements transmises à partir des images à transmettre et des indications de mouvements à transmettre,
- une interpolation pour restituer les N-1 images intermédiaires à partir des images transmises en tenant compte des indications de mouvement transmises,

caractérisé en ce que :

- l'estimation de mouvement comporte des étapes pour :

  - affecter à des blocs d'images intermédiaires une pluralité d'indications de mouvement candidat en se basant sur des images à transmettre,
  - sélectionner une indication de mouvement pour affecter une seule indication de mouvement en se basant sur une pluralité d'images contiguës, par évaluation du coût pour fournir une fonction coût CT1 pour chaque candidat de la pluralité en évaluant leur corrélation dans les images contiguës, la fonction coût étant nulle pour une corrélation parfaite, et par détermination de la seule indication de mouvement en choisissant le candidat qui minimise la fonction coût.

**Patentansprüche**

1. Übertragungssystem für Bilder, das einen Übertragungskanal mit einer relativ schmalen Bandbreite verwendet, wobei das System beinhaltet :

   einerseits eine Sendevorrichtung (1), versehen mit :

   - einem Aufnahmeelement (2), um pro Zeiteinheit vollständige Bildinformationen zu liefern,
   - einem Bewegungs-Bewertungselement (22), um für Bildpunktblöcke zu übertragende Bewegungsangaben zu liefern, unter Verwendung vollständiger Bildfolgen,
   - einem Entnahmeelement (5), um zu übertragende Bilder zu liefern, durch Entnahme eines Bildes unter N vollständigen Bildern, wobei N größer als 2, und durch Belassen von N-1 wiederherzustellender Zwischenbilder,
   - einem Sendeelement (8) zum Übertragen der zu übertragenden Bilder und der zu übertragenden Bewegungsangaben,

   und andererseits mindestens eine Empfangsvorrichtung (10), versehen mit :

   - einem Empfangselement, um die ausgehend von den zu übertragenden Bilder und den zu übertragenden Bewegungsangaben übertragenen Bilder und übertragenen Bewegungsangaben zu liefern,
   - einem Interpolationselement (33), um die N-1 Zwischenbilder ausgehend von den übertragenen Bildern unter Berücksichtigung der übertragenen Bewegungsangaben wiederherzustellen,

   dadurch gekennzeichnet, daß das Bewegungs-Bewertungselement beinhaltet :

   - Zuteilungsmittel, um Zwischenbildblöcken eine Vielzahl an kandidierenden Bewegungsangaben in bezug auf zu übertragende Bilder zuzuteilen,
   - Bewegungsangabe-Auswahlmittel, um eine einzige Bewegungsangabe unter der besagten Vielzahl kandidierender Bewegungsangaben zuzuteilen, auf der Grundlage der Bildfolge, bestehend aus :
   - ersten Kostenbewertungsmitteln, um jedem der Kandidaten der Vielzahl eine Kostenfunktion CT1 zu liefern, durch die Bewertung ihrer Korrelation in den aufeinanderfolgenden Bildern, wobei die Kostenfunktion bei perfekter Korrelation Null ist,
   - ersten Bestimmungsmitteln zum Bestimmen der einzigen Bewegungsangabe unter Auswahl des Kandidaten, der die Kostenfunktion minimiert.

2. Übertragungssystem für Bilder nach Anspruch 1, dadurch gekennzeichnet, daß die Bewegungsangabe-Auswahlmittel zusätzlich enthalten :

   - ein Fluktuationselement, das eine zweite Vielzahl kandidierender Vektoren liefert, bestimmt auf Grundlage der von den ersten Bestimmungsmitteln aufgestellten Bewegungsangabe,
   - zweite Kostenbewertungmittel zum Bestimmen einer Kostenfunktion für jeden Kandidaten der zweiten Vielzahl,
   - zweite Bestimmungsmittel unter Auswahl des Kandidaten, der die Funktionskosten minimiert.

3. Übertragungssystem für Bilder nach den Ansprüchen 1 bis 2, dadurch gekennzeichnet, daß die Kostenfunktion für jeden Kandidaten $\hat{V}_i$ ist :

$$CT1(\hat{V}_i) = \{\sum_B \{[I(x_B,TT_{2/4})] - \frac{1}{2}[I(x_B+\hat{V}_i,TT_{3/4}) + I(x_B-\hat{V}_i,TT_{1/4})]\}^2$$

$$+ \frac{1}{2}\sum_B \{[I(x_B,TT_{2/4})] - \frac{1}{2}[I(x_B+2\hat{V}_i,TT_{+1}) + I(x_B-2\hat{V}_i,TT)]\}^2\}$$

wobei $x_B$ die Punkte eines Blocks B, $TT_{1/4}$, $TT_{2/4}$, $TT_{3/4}$ die nicht entnommenen Bilder und TT und $TT_{+1}$ die nacheinander entnommenen Bilder darstellt.

**4.** Übertragungssystem für Bilder nach Anspruch 3, dadurch gekennzeichnet, daß das Interpolationselement zur Bewertung der zweiten Kostenfunktion folgende Operation durchführt :

$$CT2(VPMi) = \{\{\Sigma_B . I(x_B, TT_{2/4}) - 1/2[I(x_B - VPMi, TT) + (x_B + VPMi, TT+1)]\}\}^{1/2}$$

wobei die VPMi die Vektoren der zweiten vom Fluktuationselement erarbeitete Vielzahl ist und die Vektoren VPMi entsprechen :

$$VPM1 = \begin{vmatrix} VMH \\ VMV \end{vmatrix} \qquad VPM4 = \begin{vmatrix} VMH + u \\ VMV + u \end{vmatrix} \qquad VPM7 = \begin{vmatrix} VMH + u \\ VMV - u \end{vmatrix}$$

$$VPM2 = \begin{vmatrix} VMH + u \\ VMV \end{vmatrix} \qquad VPM5 = \begin{vmatrix} VMH - u \\ VMV \end{vmatrix} \qquad VPM8 = \begin{vmatrix} VMH - u \\ VMV + u \end{vmatrix}$$

$$VPM3 = \begin{vmatrix} VMH \\ VMV + u \end{vmatrix} \qquad VMP6 = \begin{vmatrix} VMH \\ VMV - u \end{vmatrix} \qquad VPM9 = \begin{vmatrix} VMH - u \\ VMV - u \end{vmatrix}$$

wobei u den Abstand zwischen horizontal und vertikal als gleich vorausgesetzten Punkten darstellt.
VMH und VMV sind die horizontalen und vertikalen Komponenten der Bewegungsanzeige, aufgestellt auf Grundlage der ersten Vielzahl Vektorkandidaten.

**5.** Übertragungssystem für Bilder nach Anspruch 3 oder 4, dadurch gekennzeichnet, daß das Interpolationselement für die wiederherzustellenden Bilder folgende Operationen durchführt :

a man berechnet das Bild bei TT+2/4 ausgehend von den zu den Zeitpunkten TT und TT+1 übertragenen Bildern unter Verwendung der Formel :

$$I(x, TT_{2/4}) = \frac{1}{2}[I(x-VPM, TT) + I(x+VPM, TT+1)]$$

b man berechnet $TT_{1/4}$ und $TT_{3/4}$ unter Verwendung der Formeln :

$$I(x, TT_{1/4}) = \frac{1}{2}[I(x - \frac{VPM}{2}, TT) + I(x + \frac{VPM}{2}, TT_{2/4})]$$

$$I(x, TT_{3/4}) = \frac{1}{2}[I(x - \frac{VPM}{2}, TT_{2/4}) + I(x + \frac{VPM}{2}, TT+1)]$$

**6.** Übertragungssystem für Bilder nach Anspruch 3 oder 4, dadurch gekennzeichnet, daß das Interpolationselement für die wiederherzustellenden Bilder folgende Operationen durchführt :

a man berechnet das Bild bei TT+2/4 ausgehend von den zu den Zeitpunkten TT und TT+1 übertragenen Bildern unter Verwendung der Formel :

$$I(x, TT_{2/4}) = \frac{1}{2}[I(x-VPM, TT) + I(x+VPM, TT+1)]$$

b man berechnet $TT_{1/4}$ und $TT_{3/4}$ unter Verwendung der Formeln :

$$I(x, TT_{1/4}) = \frac{3}{4}[I(x - \frac{VPM}{2}, TT)] + \frac{1}{4}[I(x + \frac{3}{2}VPM, TT+1)]$$

$$I(x, TT_{3/4}) = \frac{1}{2}[I(x - \frac{VPM}{2}, TT_{2/4}) + I(x + \frac{VPM}{2}, TT+1)]$$

**7.** Übertragungssystem für Bilder nach einem der Ansprüche 1 bis 6, dadurch gekennzeichnet, daß die Sendevorrichtung zudem mit einem zweiten Entnahmeelement versehen ist, um einen Teil der Zwischenpunkte zu belassen und um zur Bildung der zu übertragenden Bilder einen Teil der vom ersten Entnahmeelement gelieferten Bildpunkte zu entnehmen, und das Interpolationselement zudem Interpolationsschaltungen enthält, um die Zwischenpunkte ausgehend von den übertragenen Punkten wiederherzustellen.

**8.** Übertragungssystem für Bilder, bestehend aus folgenden Etappen :
einerseits zur Bildung der zu übertragenden Bildinformationen, gebildet aus den zu übertragenden Bildern und den anhand vollständiger Bilder aufgestellten Bewegungsangaben :

- einer Bewegungsbewertung, um Bewegungsangaben für vollständige Bildpunktblöcke zu liefern,
- einer Entnahme, um zu übertragende Bilder zu liefern, durch Entnahme eines Bildes unter N vollständigen Bildern, wobei N größer als 2, und durch Belassen von N-1 wiederherzustellender Zwischenbilder andererseits, um die Bilder wiederherzustellen.
- einem Empfang, um die ausgehend von den zu übertragenden Bildern und den zu übertragenden Bewegungsangaben übertragenen Bilder und übertragenen Bewegungsangaben zu liefern,
- einer Interpolation, um die N-1 Zwischenbilder ausgehend von den übertragenen Bildern unter Berücksichtigung der übertragenen Bewegungsangaben wiederherzustellen,

dadurch gekennzeichnet, daß :

- Die Bewegungsbewertung Etappen enthält, um :

  - Zwischenbildblöcken eine Vielzahl an kandidierenden Bewegungsangaben auf der Grundlage zu übertragender Bilder zuzuteilen,
  - eine Bewegungsangabe auszuwählen, um eine einzige Bewegungsangabe zuzuteilen, auf der Grundlage einer Vielzahl aufeinanderfolgender Bilder, durch Bewertung der Kosten, um jedem der Kandidaten der Vielzahl eine Kostenfunktion CT1 zu liefern, durch die Bewertung ihrer Korrelation in den aufeinanderfolgenden Bildern, wobei die Kostenfunktion bei perfekter Korrelation Null ist, und zur Bestimmung der einzigen Bewegungsangabe unter Auswahl des Kandidaten, der die Kostenfunktion minimiert.

## Claims

**1.** A system for transmitting pictures using a transmission channel having a relatively narrow passband, said system comprising:
a transmitter (1) provided with:

- a pick-up member (2) for supplying complete picture information in units of time,
- a motion estimation member (22) for supplying motion indications to be transmitted for blocks of pixels while acting on successions of complete pictures,
- a sampling member (5) for supplying pictures to be transmitted by sampling one picture among N complete pictures, N being higher than 2, and leaving N-1 intermediate pictures to be restored,
- a transmission member (8) for transmitting the pictures to be transmitted and the motion indications to be transmitted,

at least one receiver (10) provided with:

- a receiver member for supplying transmitted pictures and transmitted motion indications on the basis of pictures to be transmitted and motion indications to be transmitted,
- an interpolation member (33) for restoring the N-1 intermediate pictures on the basis of transmitted pictures while taking transmitted motion indications into account,

characterized in that
the motion estimation member comprises:

-   assignment means for assigning a plurality of candidate motion indications to blocks of intermediate pictures on the basis of pictures to be transmitted,
-   motion indication selection means for assigning a single motion indication on the basis of said plurality of candidate motion indications on the basis of the succession of pictures constituted by:
-   first cost-evaluation means for supplying a cost function CT1 for each candidate of the plurality while evaluating their correlation in the pictures of the succession, the cost function being zero for a perfect correlation,
-   first determination means for determining the single motion indication by choosing the candidate which minimizes the cost function.

2. A system for transmitting pictures as claimed in claim 1, characterized in that the motion indication selection means also comprise:

-   a fluctuation member which provides a second plurality of candidate vectors established on the basis of the motion indication established by the first determination means,
-   second cost-evaluation means for determining a cost function for each candidate of the second plurality,
-   second determination means choosing the candidate which minimizes the cost function.

3. A system for transmitting pictures as claimed in claims 1 and 2, characterized in that the cost function for each candidate $\hat{V}_i$ is:

$$CT1(\hat{V}_1) = \{\sum_B \{[I(x_B,TT_{2/4})] - \frac{1}{2}[I(x_B - \hat{V}_i,TT_{3/4}) + I(x_B - \hat{V}_i,TT_{1/4})]\}^2$$

$$- \frac{1}{2}\sum_B \{[I(x_B,TT_{2/4})] - \frac{1}{2}[I(x_B - 2\hat{V}_i,TT_{+1}) - I(x_B - 2\hat{V}_i,TT)]\}^2\}$$

in which $x_B$ represents the pixels of a block B, $TT_{1/4}$, $TT_{2/4}$, $TT_{3/4}$ represent the non-sampled pictures and TT and $TT_{+1}$ represent the successively sampled pictures.

4. A system for transmitting pictures as claimed in claim 3, characterized in that the interpolation member effects the following operation for evaluating the second cost function:

$$CT2(VPMi) = \{\{\Sigma_B.I(x_B,TT_{2/4}) - 1/2[I(x_B - VPMi,TT) + (x_B + VPMi,TT+1)]\}\}^{1/2}$$

where the VPMi are the vectors of the second plurality processed by the fluctuation member, the vectors VPMi being:

$$VPM1 = \begin{vmatrix} VMH \\ VMV \end{vmatrix} \qquad VPM4 = \begin{vmatrix} VMH + u \\ VMV + u \end{vmatrix} \qquad VPM7 = \begin{vmatrix} VMH - u \\ VMV - u \end{vmatrix}$$

$$VPM2 = \begin{vmatrix} VMH + u \\ VMV \end{vmatrix} \qquad VPM5 = \begin{vmatrix} VMH - u \\ VMV \end{vmatrix} \qquad VPM8 = \begin{vmatrix} VMH - u \\ VMV + u \end{vmatrix}$$

$$VPM3 = \begin{vmatrix} VMH \\ VMV + u \end{vmatrix} \qquad VMP6 = \begin{vmatrix} VMH \\ VMV - u \end{vmatrix} \qquad VPM9 = \begin{vmatrix} VMH - u \\ VMV - u \end{vmatrix}$$

in which u represents the distance between the pixels, which is supposed to be equal in the horizontal and vertical directions,
VMH and VMV are the horizontal and vertical components of the motion indication established on the basis of the first plurality of candidate vectors.

5. A system for transmitting pictures as claimed in claim 3 or 4, characterized in that the interpolation member effects the following operations for the pictures to be restored:

a) the picture at TT+2/4 is calculated on the basis of the pictures transmitted at the instants TT and TT+1 by applying the formula:

$$I(x,TT_{2/4}) = \frac{1}{2}[I(x\text{-VPM,TT)}+I(x\text{+VPM,TT+1)}]$$

b) $TT_{1/4}$ and $TT_{3/4}$ are calculated by using the formulas:

$$I(x,TT_{1/4}) = \frac{1}{2}[I(x\text{-}\frac{VPM}{2},TT) +I(x\text{+}\frac{VPM}{2},TT_{2/4})]$$

$$I(x,TT_{3/4}) = \frac{1}{2}[I(x\text{-}\frac{VPM}{2},TT_{2/4}) +I(x\text{+}\frac{VPM}{2},TT+1)]$$

6. A system for transmitting pictures as claimed in claim 3 or 4, characterized in that the interpolation member effects the following operations for the pictures to be restored:

a) the picture at TT+2/4 is calculated on the basis of the pictures transmitted at the instants TT and TT+1 by applying the formula:

$$I(x,TT_{2/4}) = \frac{1}{2}[I(x\text{-VPM,TT)} +I(x\text{+VPM,TT+1)}]$$

b) $TT_{1/4}$ and $TT_{3/4}$ are calculated by using the formulas:

$$I(x,TT_{1/4}) = \frac{3}{4}[I(x\text{-}\frac{VPM}{2},TT)] + \frac{1}{4}[I(x\text{+}\frac{3}{2}VPM,TT+1)]$$

$$I(x,TT_{3/4}) = \frac{1}{2}[I(x\text{-}\frac{VPM}{2},TT_{2/4}) +I(x\text{+}\frac{VPM}{2},TT+1)]$$

7. A system for transmitting pictures as claimed in any one of claims 1 to 6, characterized in that the transmitter is also provided with a second sampling member for leaving alone a part of the intermediate pixels and sampling a part of the pixels supplied by the first sampling member in order to constitute the pictures to be transmitted, and the interpolation member comprises interpolation circuits for restoring the intermediate pixels on the basis of transmitted pixels.

8. A method of transmitting pictures, comprising the following steps:
for forming information components of pictures to be transmitted constituted by pictures to be transmitted and motion indications established from complete pictures:

- a motion estimation step for supplying motion indications on complete blocks of pixels,
- a sampling step for supplying pictures to be transmitted by sampling one picture among N complete pictures, N being higher than 2, and leaving N-1 intermediate pictures to be restored,

and, for restoring the pictures,

- a receiving step for supplying transmitted pictures and transmitted motion indications on the basis of pictures to be transmitted and motion indications to be transmitted,
- an interpolation step for restoring the N-1 intermediate pictures on the basis of transmitted pictures while taking transmitted motion indications into account,

characterized in that

- the motion estimation comprises steps for:

- assigning a plurality of candidate motion indications to blocks of intermediate pictures on the basis of pictures to be transmitted,
- selecting a motion indication for assigning a single motion indication on the basis of a plurality of contiguous images, by evaluating the cost for supplying a cost function CT1 for each candidate of the plurality while evaluating their correlation in the contiguous images, the cost function being zero for a perfect correlation, and by determining the single motion indication by choosing the candidate which minimizes the cost function.

FIG. 1

FIG. 2

FIG. 3

FIG. 4

FIG. 5

EP 0 340 843 B1

FIG. 6

FIG. 7

FIG. 8

17

FIG. 9

FIG. 10

FIG.11

EP 0 340 843 B1

19